# EUROPÄISCHE PATENTSCHRIFT

(11) **EP 4 437 524 B1**
(45) Veröffentlichungstag und Bekanntmachung des Hinweises auf die Patenterteilung: **16.07.2025**
(21) Anmeldenummer: 23704343.5
(22) Anmeldetag: 09.02.2023
(51) Int. Cl.: G08B 25/00

(54) **VERFAHREN UND GERÄT ZUM ABSETZEN EINES FAHRZEUGNOTRUFS**
METHOD AND DEVICE FOR PLACING A VEHICLE EMERGENCY CALL
PROCÉDÉ ET DISPOSITIF POUR DÉCLENCHER UN APPEL D'URGENCE À PARTIR D'UN VÉHICULE

(30) Priorität: 08.02.2022 DE 102022102843
(43) Veröffentlichungstag der Anmeldung: 02.10.2024
(73) Patentinhaber: AUDI AG, 85057 Ingolstadt (DE)
(72) Erfinder: VAITL, Matthias, 85764 Oberschleißheim (DE)
(74) Vertreter: RDL Patentanwälte PartG mbB
(86) Internationale Anmeldenummer: PCT/EP2023/053238
(87) Internationale Veröffentlichungsnummer: WO 2023/152247

(56) Entgegenhaltungen:
- US-A1- 2014 187 191
- US-B1- 8 604 931

## Beschreibung

Die Erfindung betrifft ein Verfahren zum Absetzen eines Notrufs eines Fahrzeugs, bei dem ein Notrufsteuergerät eines Fahrzeugs ein Unfallereignis erfasst und aufgrund des erfassten Unfallereignisses automatisch einen Notruf absetzt und eine Sprechverbindung zu einer primären Leitstelle bereitstellt. Ferner betrifft die Erfindung ein Notrufsteuergerät für ein Fahrzeug und ein Fahrzeug.

Verfahren der eingangs genannten Art gehören in unterschiedlichen Ausgestaltungen zum Stand der Technik und dienen dazu, bei einem Unfall eines Fahrzeugs automatisch eine Hilfeleistung anzufordern. Bei einem Unfall des Fahrzeugs empfängt die primäre Leitstelle einen von dem Fahrzeug abgesetzten Notruf und/oder einen Anruf eines Insassen des Fahrzeugs und veranlasst ausgehend von mittels des Notrufs und/oder des Anrufs übertragener Informationen die geeignete Hilfeleistung.

DE 11 2011 101 204 B4 behandelt den Fall, dass die primäre Leitstelle nicht erreichbar oder empfangsbereit ist und offenbart ein Verfahren zum Absetzen eines Notrufs, bei dem ein Notrufsteuergerät aus einer ersten Liste eine primäre Leitstelle auswählt und eine erste Verbindung zu der primären Leitstelle bereitstellt und bei einem Misserfolg der ersten Verbindung aus einer zweiten Liste eine sekundäre Leitstelle auswählt und eine zweite Verbindung zu der sekundären Leitstelle bereitstellt.

Der Notruf wird hier als ein von dem Fahrzeug zu der primären Leitstelle übermitteltes Datenpaket verstanden, welches Angaben betreffend den Unfall des Fahrzeugs umfasst, beispielsweise eine Position des Fahrzeugs oder einen Schaden des Fahrzeugs. Das Datenpaket braucht nicht über eine dedizierte Datenverbindung gesendet zu werden. Das Notrufsteuergerät kann das Datenpaket wie ein Faxgerät als ein auditiv wahrnehmbares Audiosignal zu der Leitstelle senden.

EP 0 737 952 A1 offenbart ein solches Verfahren zum Absetzen eines Notrufs eines Fahrzeugs, bei dem ein Notrufsteuergerät des Fahrzeugs ein Audiosignal, welches eine Position des Fahrzeugs und weitere Daten betreffend einen Unfall kodiert, über eine Sprechverbindung zu einer Leitstelle sendet, die Leitstelle das gesendete Audiosignal empfängt und einen Bestätigungston zu dem Notrufsteuergerät sendet. Das Notrufsteuergerät sendet das Audiosignal automatisch erneut, wenn es den Bestätigungston nicht empfängt.

DE 696 26 187 T2 offenbart ein automatisches Notrufverfahren für ein Fahrzeug, bei dem ein während einer Sprechverbindung ausbleibender Bestätigungston der Leitstelle nach deren Ende ein erneutes Bereitstellen einer Sprechverbindung auslöst. Aus WO 2019/143436 A1 ist dagegen ein Verfahren bekannt, eine Sprechverbindung automatisch zu beenden, wenn während einer vorbestimmten Zeitdauer nicht gesprochen wird.

An einem Fehlen des Bestätigungstons kann das Notrufsteuergerät ein vorzeitiges Ende oder einen Fehler und wahrscheinlichen Misserfolg des Notrufs erkennen. Unter einem Misserfolg des Notrufs wird hier allgemein verstanden, dass die Leitstelle nicht sämtliche für die geeignete, d.h. rasche und wirkungsvolle, Hilfeleistung erforderlichen Informationen empfängt. Dagegen ist der Notruf erfolgreich, wenn die Leitstelle sämtliche für die geeignete Hilfeleistung erforderlichen Informationen erhält.

Alternativ zu der vorstehenden Lösung kann auch ein Kommunikationsnetz, welches für das Fahrzeug die Verbindung zu der primären Leitstelle bereitstellt, ein vorzeitiges Ende der Verbindung erkennen.

Davon ausgehend offenbart US 6,990,349 B1 ein Verfahren zum Absetzen eines Notrufs eines Fahrzeugs, bei dem ein Vermittlungsknoten eine von einem Fahrzeug bereitgestellte Verbindung automatisch erneut bereitstellt, wenn die Verbindung vorzeitig endet und der Vermittlungsknoten die Verbindung als einen Notruf des Fahrzeugs erkennt.

Die Sprechverbindung erlaubt es dem Insassen des Fahrzeugs, weitere über den Notruf hinausgehende Informationen für die Leitstelle verbal bereitzustellen, beispielsweise eine Anzahl von verletzten Personen oder Arten von Verletzungen. Insofern kann auch ein vorzeitiges Ende der Sprechverbindung ungünstig sein im Hinblick auf die geeignete Hilfeleistung.

US 8,604,931 B1 offenbart ein ähnliches Verfahren, bei dem ein mobiles Endgerät einen Notruf zu einer sekundären Leitstelle absetzt, wenn ein Notruf zu einer primären Leitstelle nicht erfolgreich war.

US 2014/187191 A1 offenbart ein Verfahren, bei dem ein Notrufsteuergerät eine zweite Sprechverbindung zu der primären Leitstelle bereitstellt, wenn eine Gesprächsdauer einer ersten Sprechverbindung kürzer war als eine vorbestimmte Mindestgesprächsdauer.

Bei den beiden vorstehenden Verfahren hängt das sichere Erkennen eines Misserfolgs der Verbindung von einem Beitrag einer bezogen auf das Fahrzeug separaten Vorrichtung ab. Die primäre Leitstelle muss den Bestätigungston senden und der Vermittlungsknoten muss das vorzeitige Ende der Verbindung und die Verbindung als einen Notruf erkennen.

Es ist daher eine Aufgabe der Erfindung ein Verfahren zum Absetzen eines Notruf eines Fahrzeugs vorzuschlagen, welches einen Erfolg einer von dem Fahrzeug bereitgestellten Sprechverbindung sicherstellt. Weitere Aufgaben der Erfindung sind, ein Notrufsteuergerät für ein Fahrzeug und ein Fahrzeug bereitzustellen.

Ein Gegenstand der Erfindung ist ein Verfahren zum Absetzen eines Notrufs eines Fahrzeugs, bei dem ein Notrufsteuergerät eines Fahrzeugs ein Unfallereignis erfasst und aufgrund des erfassten Unfallereignisses automatisch einen Notruf absetzt und eine Sprechverbindung zu einer primären Leitstelle bereitstellt. Eine Vielzahl von Fahrzeugen umfassen Notrufsteuergeräte mit einer vorbestimmten primären Leitstelle, welche zum automatischen Bereitstellen einer Sprechverbindung konfiguriert sind. Entsprechend lässt sich das erfindungsgemäße Verfahren in vielen Notrufsteuergeräten implementieren.

Erfindungsgemäß stellt das Notrufsteuergerät die Sprechverbindung automatisch erneut her, wenn die bereitgestellte Sprechverbindung endet und eine von einem Dauermessmodul gemessene Dauer der bereitgestellten Sprechverbindung geringer ist als eine vorbestimmte Minimaldauer. Ein Misserfolg der Sprechverbindung wird anhand der Dauer der Sprechverbindung erkannt. Ein verbales Bereitstellen einer Informationen erfordert jedenfalls eine Minimaldauer der Sprechverbindung. Wenn die Minimaldauer unterschritten ist, die Dauer der Sprechverbindung also unzureichend war, kann das Notrufsteuergerät mit einer hohen Wahrscheinlichkeit einen Misserfolg der Sprechverbindung annehmen und abhelfen. Auf diese Weise wird ein Erfolg der von dem Fahrzeug bereitgestellten Sprechverbindung sicherstellt.

Das erneute Bereitstellen kann eine vorbestimmte Mehrzahl von erfolglosen Verbindungsversuchen umfassen. Nach dem Misserfolg der Sprechverbindung kann das Herstellen einer neuen Sprechverbindung scheitern, beispielsweise wenn die primäre Leitstelle vorübergehend nicht erreichbar ist oder ein vorübergehender Verbindungsfehler auftritt. Die vorbestimmte Mehrzahl erhöht eine Wahrscheinlichkeit für die neue Sprechverbindung.

Vorteilhaft wird nach der bestimmten Mehrzahl von erfolglosen Verbindungsversuchen eine weitere Sprechverbindung zu einer sekundären Leitstelle bereitgestellt. Die sekundäre Leitstelle kann anstelle der primären Leitstelle die geeignete Hilfeleistung bereitstellen. Die primäre Leitstelle kann von einem Hersteller des Fahrzeugs für die hergestellten Fahrzeuge bereitgestellt werden. Die sekundäre Leitstelle kann hoheitlich, d. h. von einer offiziellen Stelle, unabhängig von dem Hersteller für jedes Fahrzeug bereitgestellt werden.

Weiterhin erfindungsgemäß analysiert das Notrufsteuergerät ein Gespräch während der bereitgestellten Sprechverbindung und stellt das Notrufsteuergerät eine weitere Sprechverbindung zu einer sekundären Leitstelle her, wenn das analysierte Gespräch eine Bandansage der primären Leitstelle umfasst. Die Bandansage hindert den Insassen an einem verbalen Bereitstellen von Informationen, was mit einem Misserfolg der Sprechverbindung einhergeht. Das Notrufsteuergerät nimmt an, dass mit einer hohen Wahrscheinlichkeit eine Person der primären Leitstelle nicht erreichbar ist.

Idealerweise analysiert ein künstliches neuronales Netz des Notrufsteuergeräts das Gespräch. Das künstliche neuronale Netz ist besonders zur Erkennung von Mustern geeignet und kann einfach und insbesondere überwacht trainiert werden, verbale Äußerungen einer Person von verbalen Äußerungen einer Bandansage zu unterscheiden.

Das Notrufsteuergerät stellt die weitere Sprechverbindung vorteilhaft erneut her, wenn die bereitgestellte weitere Sprechverbindung endet und eine von dem Dauermessmodul gemessene Dauer der bereitgestellten weiteren Sprechverbindung geringer ist als die vorbestimmte Minimaldauer. Die weitere Sprechverbindung wertet das Notrufsteuergerät anhand desselben Kriteriums als einen Misserfolg wie die erste ursprüngliche Sprechverbindung.

Noch ein Gegenstand der Erfindung ist ein Notrufsteuergerät für ein Fahrzeug, welches ausgebildet ist, ein Unfallereignis zu erfassen und aufgrund des erfassten Unfallereignisses automatisch einen Notruf abzusetzen und eine Sprechverbindung zu einer primären Leitstelle bereitzustellen. Eine Konfiguration des Notrufsteuergeräts umfasst eine Adresse, beispielsweise eine Telefonnummer, der primären Leitstelle. Das Notrufsteuergerät kann ein Softwareprogramm umfassen, welches ein automatisches Absetzen eines Notrufs und ein Herstellen einer Sprechverbindung zu der primären Leitstelle implementiert.

Erfindungsgemäß umfasst das Notrufsteuergerät ein Dauermessmodul zum Messen einer Dauer einer bereitgestellten Sprechverbindung und ist das Notrufsteuergerät ausgebildet, zum Absetzen eines Notrufs ein Verfahren nach einer Ausführungsform der Erfindung auszuführen. Das Dauermessmodul ist ausgebildet, die Dauer als eine Zeit von einem Beginn der Sprechverbindung bis zu einem Ende der Sprechverbindung zu messen. Auf diese Weise erkennt das Notrufsteuergerät einen Misserfolg der Sprechverbindung und stellt einen Erfolg der Sprechverbindung sicher.

Bevorzugt weist das Notrufsteuergerät eine variable Konfiguration zum Bestimmen einer Mehrzahl von erfolglosen Verbindungsversuchen für ein erneutes Bereitstellen einer Sprechverbindung auf. Die variable Konfiguration erlaubt einem Hersteller des Fahrzeugs und/oder dem Insassen des Fahrzeugs die Mehrzahl von erfolglosen Verbindungsversuchen variabel zu bestimmen, d.h. wie gewünscht einzustellen.

Vorteilhaft ist das Notrufsteuergerät ausgebildet, wahlweise oder automatisch eine Sprechverbindung zu einer primären Leitstelle und/oder zu einer sekundären Leitstelle bereitzustellen. Die Konfiguration des Notrufsteuergeräts kann eine Adresse, beispielsweise eine Telefonnummer, der sekundären Leitstelle umfassen. Die variable Konfiguration kann es dem Hersteller des Fahrzeugs und/oder dem Insassen des Fahrzeugs erlauben, einzustellen, ob die Sprechverbindung wahlweise, d. h. nach einer Bestätigung durch den Insassen, oder automatisch bereitgestellt wird.

Ein weiterer Gegenstand der Erfindung ist ein Fahrzeug mit einem Notrufsteuergerät. Das Fahrzeug kann einfach durch ein Austauschen eines vorhandenen Steuergeräts erfindungsgemäß ausgebildet werden. Notrufsteuergeräte gehören zu einer Vielzahl von Fahrzeugen, was mit vielen Anwendungsmöglichkeiten der Erfindung einhergeht.

Erfindungsgemäß ist das Notrufsteuergerät ein Notrufsteuergerät nach einer Ausführungsform der Erfindung. Dank dem Notrufsteuergerät ist eine automatisch bereitgestellte und erfolgreiche Sprechverbindung bei einem Unfall des Fahrzeugs sichergestellt und eine Sicherheit des Fahrzeugs erhöht.

Ein wesentlicher Vorteil des erfindungsgemäßen Verfahrens besteht darin, dass ein Misserfolg einer automatisch bereitgestellten Sprechverbindung sicher erkannt wird und bei einem Erkennen des Misserfolgs ein Erfolg der Sprechverbindung mittels weiterer Verbindungsversuche sichergestellt wird. Auf diese Weise ist eine Sicherheit eines Fahrzeugs und eines Insassen des Fahrzeugs erhöht.

Die Erfindung ist anhand einer Ausführungsform in den Zeichnungen schematisch dargestellt und wird unter Bezugnahme auf die Zeichnungen weiter beschrieben. Es zeigt:

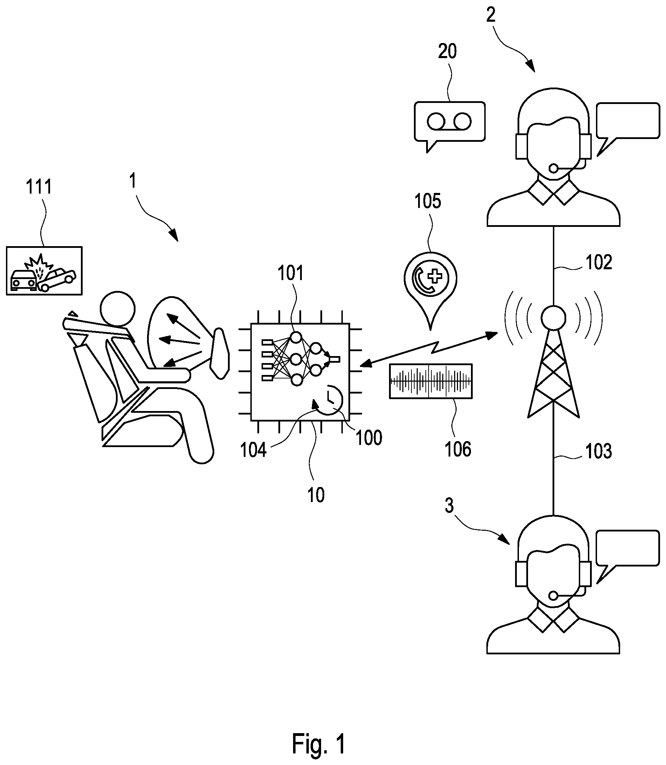

Figur 1 ein Blockdiagramm eines Fahrzeugs nach einer Ausführungsform der Erfindung.
Figur 1 zeigt ein Blockdiagramm eines Fahrzeugs 1 nach einer Ausführungsform der Erfindung. Das Fahrzeug 1 umfasst ein Notrufsteuergerät 10 nach einer Ausführungsform der Erfindung, welches für das Fahrzeug 1 geeignet ist. Das Notrufsteuergerät 10 umfasst ein Dauermessmodul 100 zum Messen einer Dauer einer bereitgestellten Sprechverbindung 102.

Das Notrufsteuergerät 10 kann ferner ein künstliches neuronales Netz 101 umfassen und/oder eine variable Konfiguration zum Bestimmen einer Mehrzahl von erfolglosen Verbindungsversuchen für ein erneutes Bereitstellen einer Sprechverbindung 102 aufweisen. Ferner kann das Notrufsteuergerät 10 ausgebildet sein, eine Sprechverbindung 102, 103 zu einer primären Leitstelle 2 und/oder zu einer sekundären Leitstelle 3 wahlweise oder automatisch bereitzustellen.

Das Notrufsteuergerät 10 ist ausgebildet, zum Absetzen eines Notrufs 105 des Fahrzeugs 1 ein nachfolgend beschriebenes Verfahren nach einer Ausführungsform der Erfindung auszuführen.

Das Notrufsteuergerät 10 des Fahrzeugs 1 erfasst ein Unfallereignis 111 und setzt aufgrund des erfassten Unfallereignisses 111 automatisch einen Notruf 105 ab.

Ferner stellt das Notrufsteuergerät 10 eine Sprechverbindung 102 zu einer primären Leitstelle 2 her.

Wenn die bereitgestellte Sprechverbindung 102 endet und eine von einem Dauermessmodul 100 des Notrufsteuergeräts 10 gemessene Dauer der beendeten Sprechverbindung 102 geringer ist als eine vorbestimmte Minimaldauer 104, stellt das Notrufsteuergerät 10 die Sprechverbindung 102 automatisch erneut bereit.

Das erneute Bereitstellen kann eine vorbestimmte Mehrzahl von erfolglosen Verbindungsversuchen umfassen. Bevorzugt wird nach der bestimmten Mehrzahl von erfolglosen Verbindungsversuchen eine weitere Sprechverbindung 103 zu einer sekundären Leitstelle 3 bereitgestellt.

Abgesehen davon analysiert das Notrufsteuergerät 10 ein Gespräch 106, d.h. ein elektronisch übertragenes Audiosignal, während der bereitgestellten Sprechverbindung 102 und stellt eine weitere Sprechverbindung 103 zu der sekundären Leitstelle 3 bereit, wenn das analysierte Gespräch 106 eine Bandansage 20 der primären Leitstelle 2 umfasst. Insbesondere kann das künstliche neuronale Netz 101 des Notrufsteuergeräts 10 das Gespräch 106 analysieren.

Das Notrufsteuergerät 10 stellt idealerweise die weitere Sprechverbindung 103 erneut her, wenn die bereitgestellte weitere Sprechverbindung 103 endet und eine von dem Dauermessmodul 100 gemessene Dauer der bereitgestellten weiteren Sprechverbindung 103 geringer ist als die vorbestimmte Minimaldauer 104.

### BEZUGSZEICHENLISTE:

- 1: Fahrzeug
- 10: Notrufsteuergerät
- 100: Dauermessmodul
- 101: künstliches neuronales Netz
- 102: Sprechverbindung
- 103: weitere Sprechverbindung
- 104: Minimaldauer
- 105: Notruf
- 106: Gespräch
- 111: Unfallereignis
- 2: primäre Leitstelle
- 20: Bandansage
- 3: sekundäre Leitstelle

## Patentansprüche

1. Verfahren zum Absetzen eines Notrufs (105) eines Fahrzeugs (1), bei dem
- ein Notrufsteuergerät (10) eines Fahrzeugs (1) ein Unfallereignis (111) erfasst und aufgrund des erfassten Unfallereignisses (111) automatisch einen Notruf (105) absetzt und eine Sprechverbindung (102) zu einer primären Leitstelle (2) bereitstellt;
- das Notrufsteuergerät (10) die Sprechverbindung (102) automatisch erneut bereitstellt, wenn die bereitgestellte Sprechverbindung (102) endet und eine von einem Dauermessmodul (100) des Notrufsteuergeräts (10) gemessene Dauer der beendeten Sprechverbindung (102) geringer ist als eine vorbestimmte Minimaldauer (104), **dadurch gekennzeichnet, dass**
- das Notrufsteuergerät (10) ein Gespräch (106) während der bereitgestellten Sprechverbindung (102) analysiert und eine weitere Sprechverbindung (103) zu einer sekundären Leitstelle (3) bereitstellt, wenn das analysierte Gespräch (106) eine Bandansage (20) der primären Leitstelle (2) umfasst.

2. Verfahren nach Anspruch 1, bei dem das erneute Bereitstellen eine vorbestimmte Mehrzahl von erfolglosen Verbindungsversuchen umfasst.

3. Verfahren nach Anspruch 2, bei dem nach der bestimmten Mehrzahl von erfolglosen Verbindungsversuchen eine weitere Sprechverbindung (103) zu der sekundären Leitstelle (3) bereitgestellt wird.

4. Verfahren nach einem der Ansprüche 1 bis 3, bei dem ein künstliches neuronales Netz (101) des Notrufsteuergeräts (10) das Gespräch (106) analysiert.

5. Verfahren nach einem der Ansprüche 1 bis 4, bei dem das Notrufsteuergerät (10) die weitere Sprechverbindung (103) erneut bereitstellt, wenn die bereitgestellte weitere Sprechverbindung (103) endet und eine von dem Dauermessmodul (100) gemessene Dauer der bereitgestellten weiteren Sprechverbindung (103) geringer ist als die vorbestimmte Minimaldauer (104).

6. Notrufsteuergerät (10) für ein Fahrzeug (1), welches ein Dauermessmodul (100) zum Messen einer Dauer einer bereitgestellten Sprechverbindung (102) umfasst und ausgebildet ist, zum Absetzen eines Notrufs (105) des Fahrzeugs (1) ein Verfahren nach einem der Ansprüche 1 bis 5 auszuführen.

7. Notrufsteuergerät nach Anspruch 6, aufweisend eine variable Konfiguration zum Bestimmen einer Mehrzahl von erfolglosen Verbindungsversuchen für ein erneutes Bereitstellen einer Sprechverbindung (102).

8. Notrufsteuergerät nach Anspruch 6 oder 7, welches ausgebildet ist, wahlweise oder automatisch eine Sprechverbindung (102, 103) zu einer primären Leitstelle (2) und/oder zu einer sekundären Leitstelle (3) bereitzustellen.

9. Fahrzeug (1), mit einem Notrufsteuergerät (10) nach einem der Ansprüche 6 bis 8.

## Claims

1. A method for making an emergency call (105) of a vehicle (1), in which
- an emergency call control device (10) of a vehicle (1) detects an accident event (111) and automatically makes an emergency call (105) on the basis of the detected accident event (111) and establishes a voice connection (102) to a primary control center (2);
- the emergency call control device (10) automatically reestablishes the voice connection (102) again when the established voice connection (102) ends and a duration of the ended voice connection (102) measured by a duration measurement module (100) of the emergency call control device (10) is less than a predetermined minimum duration (104), **characterized in that**
- the emergency call control device (10) analyzes a call (106) during the established voice connection (102) and establishes a further voice connection (103) to a secondary control station (3) if the analyzed call (106) comprises a recorded announcement (20) of the primary control station (2).

2. The method according to claim 1, wherein the reestablishing comprises a predetermined plurality of unsuccessful connection attempts.

3. The method according to claim 2, wherein after the determined plurality of unsuccessful connection attempts, a further voice connection (103) to the secondary control center (3) is established.

4. The method according to one of claims 1 to 3, wherein an artificial neural network (101) of the emergency call control device (10) analyzes the call (106).

5. The method according to one of claims 1 to 4, wherein the emergency call control device (10) reestablishes the further voice connection (103) when the established further voice connection (103) ends and a duration of the established further voice connection (103) measured by the duration measurement module (100) is less than the predetermined minimum duration (104).

6. An emergency call control device (10) for a vehicle (1), which comprises a duration measurement module (100) for measuring a duration of an established voice connection (102) and is configured to carry out a method according to one of claims 1 to 5 for making an emergency call (105) of the vehicle (1).

7. The emergency call control device according to claim 6, having a variable configuration for determining a plurality of unsuccessful connection attempts for reestablishing a voice connection (102).

8. The emergency call control device according to claim 6 or 7, which is formed to selectively or automatically establish a voice connection (102, 103) to a primary control center (2) and/or to a secondary control center (3).

9. A vehicle (1), with an emergency call control device (10) according to one of claims 6 to 8.

## Revendications

1. Procédé pour déclencher un appel d'urgence (105) d'un véhicule (1), dans lequel
- un dispositif de commande d'appel d'urgence (10) d'un véhicule (1) détecte un événement accidentel (111) et, en raison de l'événement accidentel (111) détecté, déclenche automatiquement un appel d'urgence (105) et établit une liaison vocale (102) avec un centre de contrôle primaire (2);
- le dispositif de commande d'appel d'urgence (10) rétablit automatiquement la liaison vocale (102), si la liaison vocale (102) établie se termine et qu'une durée de la liaison vocale (102) terminée, mesurée par un module de mesure de durée (100) du dispositif de commande d'appel d'urgence (10), est inférieure à une durée minimale (104) prédéterminée, **caractérisé en ce que**
- le dispositif de commande d'appel d'urgence (10) analyse une conversation (106) pendant la liaison vocale (102) établie et, si la conversation (106) analysée comprend un message enregistré (20) du centre de contrôle primaire (2), établit une autre liaison vocale (103) avec un centre de contrôle secondaire (3).

2. Procédé selon la revendication 1, dans lequel l'rétablissement comprend une pluralité prédéterminée de tentatives de connexion infructueuses.

3. Procédé selon la revendication 2, dans lequel, après la pluralité déterminée de tentatives de connexion infructueuses, une autre liaison vocale (103) est établie avec le centre de contrôle secondaire (3).

4. Procédé selon l'une des revendications 1 à 3, dans lequel un réseau neuronal artificiel (101) du dispositif de commande d'appel d'urgence (10) analyse la conversation (106).

5. Procédé selon l'une des revendications 1 à 4, dans lequel le dispositif de commande d'appel d'urgence (10) rétablit l'autre liaison vocale (103), si l'autre liaison vocale (103) rétablie se termine et qu'une durée de l'autre liaison vocale (103) rétablie, mesurée par le module de mesure de durée (100), est inférieure à la durée minimale (104) prédéterminée.

6. Dispositif de commande d'appel d'urgence (10) pour un véhicule (1), comprenant un module de mesure de durée (100) pour mesurer une durée d'une liaison vocale (102) établie et conçu pour mettre en œuvre un procédé selon l'une des revendications 1 à 5 pour déclencher un appel d'urgence (105) du véhicule (1).

7. Dispositif de commande d'appel d'urgence selon la revendication 6, présentant une configuration variable pour déterminer une pluralité de tentatives de connexion infructueuses pour rétablir une liaison vocale (102).

8. Dispositif de commande d'appel d'urgence selon la revendication 6 ou 7, conçu pour établir sélectivement ou automatiquement une liaison vocale (102, 103) avec un centre de contrôle primaire (2) et/ou avec un centre de contrôle secondaire (3).

9. Véhicule (1) doté d'un dispositif de commande d'appel d'urgence (10) selon l'une des revendications 6 à 8.
